Europäisches Patentamt

(19) European Patent Office          (11) Publication number:          **0 263 101**

Office européen des brevets                                      **B1**

(12)                          **EUROPEAN PATENT SPECIFICATION**

(45) Date of publication of patent specification: **12.09.90**     (51) Int. Cl.⁵: **B 65 D 33/16, B 65 B 7/00, B 65 B 55/00**

(21) Application number: **86903630.1**

(22) Date of filing: **30.04.86**

(86) International application number:
**PCT/SE86/00200**

(87) International publication number:
**WO 87/00146 15.01.87 Gazette 87/01**

(54) **CLOSABLE BAG AND METHOD AND ARRANGEMENT FOR ASEPTIC FILLING THEREOF.**

(30) Priority: **08.07.85 SE 8503389**

(43) Date of publication of application:
**13.04.88 Bulletin 88/15**

(45) Publication of the grant of the patent:
**12.09.90 Bulletin 90/37**

(84) Designated Contracting States:
**AT BE CH DE FR GB IT LI LU NL SE**

(56) References cited:
**none**

(73) Proprietor: **ALFA-LAVAL FOOD & DAIRY ENGINEERING AB**
**P.O. Box 64**
**S-221 00 Lund (SE)**

(72) Inventor: **MARTENSSON, Karl**
**Storekrok 8**
**S-222 38 Lund (SE)**

(74) Representative: **Lerwill, John et al**
**A.A. Thornton & Co. Northumberland House**
**303-306 High Holborn**
**London, WC1V 7LE (GB)**

Courier Press, Leamington Spa, England.

## Description

The present invention relates to closable bags of flexible material, and in particular such a bag provided with an inlet member having an opening for filling the bag with material, for instance liquid, and a member for closing of the filling opening from inside of the bag. The invention also relates to a method and an apparatus for aseptic filling of such a bag.

A bag as mentioned above is known from GB—A—2105291. In an empty condition prior to filling the known bag is internally sterilized and sealed by means of a membrane, which is applied from the outside of the bag across the filling opening of the inlet member. The closing member of the bag is a flexibly formed flap partly fastened to the edge of the inlet member around the filling opening. For aseptic filling of the known bag with a sterile or air sensitive liquid material, such as wine, juices etc., the bag is placed in a supporting member, which engages the inlet member and moves it into abutment against a filling nozzle. The space formed between the latter and the membrane is first sterilized by means of a sterilizing gas. Thereafter the liquid is supplied through the filling nozzle, the membrane being ruptured by the liquid pressure so that the filling opening is uncovered. The liquid stream pushes away the closing member so that a free passage is formed into the bag for the liquid. After the filling of the bag the filling opening is permanently closed by means of a heat sealing device, which seals the closing member against the inlet member.

The known bag is not suited for initial sterilization of the inlet member by means of steam, as hot steam under high pressure could destroy the membrane provided on the inlet member. This is a drawback as heat sterilization by means of steam is safer and easier to control than sterilization by a gas.

Another drawback with the known bag is that it is not possible to utilize the inlet member for a total or partial discharge of the bag under aseptic conditions, since the closing member is permanently sealed to the inlet member on the inside of the bag.

A further drawback with the known bag is that the filling operation is time-consuming, since the size of the filling opening is limited by the fact that the membrane for strength reasons can have only a relatively small area. Furthermore, the liquid flow into the bag will be throttled by the closing member partly covering the filling opening inside the bag.

The present invention aims to avoid the drawbacks of the known bag described above and in accordance with the invention there is provided a closable bag including a main part of flexible material, and inlet and closing members made separately from the main part, the inlet member being secured to the main part and having an opening for filling the bag and the closing member being arranged to cooperate with the inlet member to close the filling opening from inside the bag, characterised in that the inlet and closing members are of a material stiffer than the flexible material of the main part and substantially resistant to deformation, the closing member is provided with sealing means engageable with the inlet member to close the filling opening and releasable therefrom to open the filling opening, and the inlet and closing members have respective engagement means for cooperation with holding means of an apparatus for effecting relative movement of the inlet and closing members toward and away from each other to close and open respectively the filling opening by engaging the sealing means with and releasing the sealing means from the inlet member.

A bag according to the invention can be of simple design, be suited to rapid filling with material under aseptic conditions, and allow steam to be used for the sterilization during the filling operation.

As there is no membrane covering the filling opening, steam can be used for sterilization of a space formed between a filling member with which the inlet member is engaged and the closing member, before the filling opening is opened. The forces due to the steam pressure and tending to separate the inlet member and the closing member can be taken up by the filling apparatus, as both these members are adapted for engagement with the filling apparatus, so that the filling opening is kept safely sealed during the steam sterilization.

As the inlet member and the closing member are of stiffer material than the flexible material of the bag and are substantially resistant to deformation and also have no membrane, the filling opening can be relatively large for rapid filling of the bag. In addition by means of the filling apparatus it is possible to separate the inlet member from the closing member so that the filling opening is completely uncovered and consequently the closing member does not restrict the inflow of liquid during the filling.

The arrangement of the closing member for releasable sealing engagement with the inlet member enables a total or partial discharge of the bag content to take place through the filling opening under aseptic conditions, for instance involving steam sterilization in the same way as described above in connection with the filling of the bag.

In a preferred embodiment of the bag according to the invention, the bag comprises two opposed walls, the inlet member being fastened to one of the walls and the closing member being fastened to the other wall opposite to the inlet member. Hereby the advantage is achieved that the closing member and the inlet member may perform only a traversing movement relative to each other for the closing or opening, respectively, of the filling opening. This means that the filling apparatus can be made simple, so that it will have a reliable function.

Advantageously, the closing member may be positioned during filling so that inflowing liquid will impinge on the closing member and be distributed thereby within the bag. Hereby the strength of the bag walls no longer limit the size of the flow.

The invention also provides a method of aseptic filling of a bag according to the invention, the method comprising the steps of;

placing a sterilized and closed bag in a filling apparatus;

engaging holding means of the apparatus with the engagement means of the inlet and closing members;

connecting the inlet member to a filling member of the apparatus and thereby forming a space between the filling member and the closing member;

sterilizing said space with a fluid, while maintaining the filling opening of the inlet member closed;

operating the holding means of the apparatus to separate the inlet member from the closing member and thereby open the filling opening of the inlet member;

filling the bag with material supplied from said filling member;

operating the holding means of the apparatus to bring the inlet member and closing member together and thereby close the filling opening of the inlet member; and

removing the filled bag from the filling apparatus.

A bag according to the invention can also be emptied totally or partially under aseptic conditions, the method in this case comprising the following steps:

the filled bag in a closed condition is placed on an apparatus which is engaged with the inlet member and with the closing member;

the inlet member is connected to a discharge member;

the space between the discharge member and the closing member is sterilized by means of a fluid, preferably steam, while the filling opening is kept closed;

the inlet member and the closing member are separated by means of the apparatus to open the filling opening;

the material in the bag is discharged totally or partially by means of the discharge member;

the inlet member and the closing member are brought together after the discharging operation by means of the apparatus to close the filling opening;

the inlet member is separated from the discharge member; and

the totally or partially emptied bag is removed from the apparatus.

The invention also provides an apparatus for aseptic filling of a bag according to the invention, the apparatus comprising:

holding means releasably engageable with the engagement means of the inlet and closing members and operable for moving said members relative to one another to open and close the filling opening of the inlet member;

a filling member connectable to the inlet member for supply of filling material to the bag, the filling member being arranged for a space to be formed between the closing member and the filling member before and after filling of the bag; and

means for sterilizing said space while the filling member is connected to the inlet member.

In a preferred embodiment, the apparatus is arranged to engage the closing member from the outside of the bag at a distance from the inlet member. Conveniently the closing member can then be sealingly fastened around an opening in the bag wall opposite the inlet member.

However, it is also possible to arrange the apparatus to engage the closing member through the filling opening of the inlet member. Then the closing member need not be fastened to the bag, but the apparatus will be more complicated. Furthermore, filling of the bag will become more difficult, since parts of the apparatus will be impeding flow into the bag.

The invention is described in more detail below with reference to the accompanying drawings, in which:-

Figure 1 is a section through a bag according to the invention and with an open filling opening;

Figure 2 is a section through the same bag but with the filling opening closed;

Figure 3 is a section through part of a filling apparatus according to the invention, and shown in combination with the bag of Figures 1 and 2, the filling opening being closed; and

Figure 4 is the same section as in Figure 3 but with the filling opening of the bag opened.

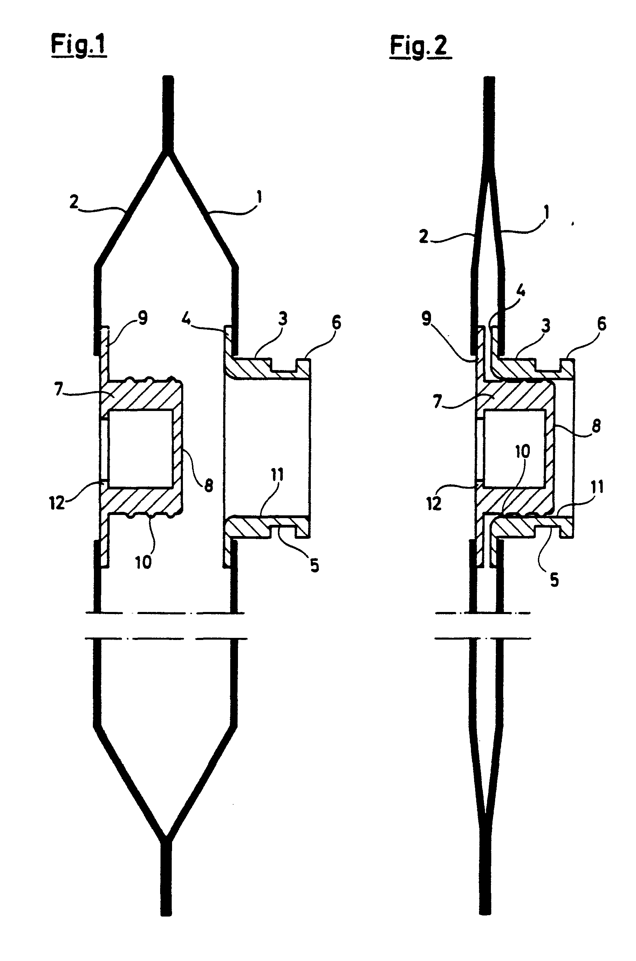

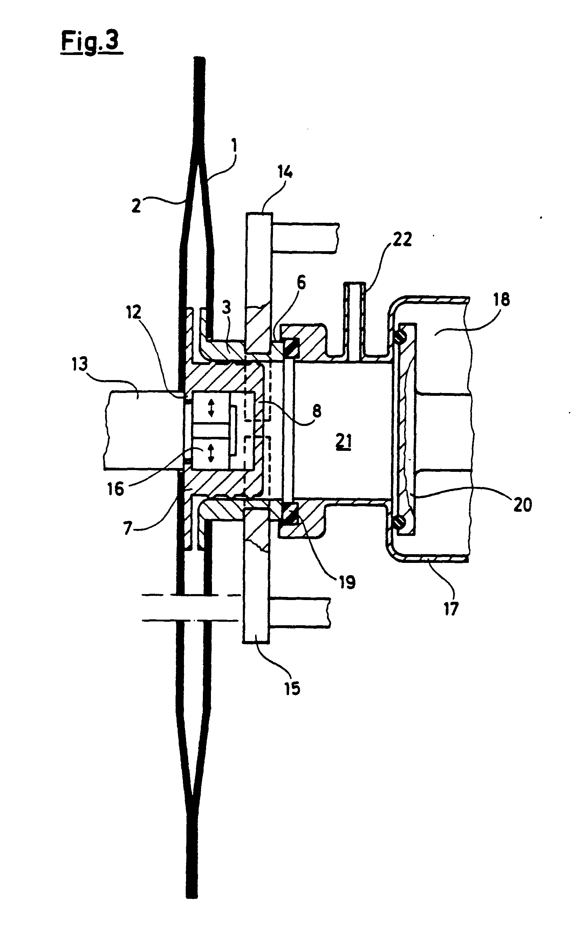

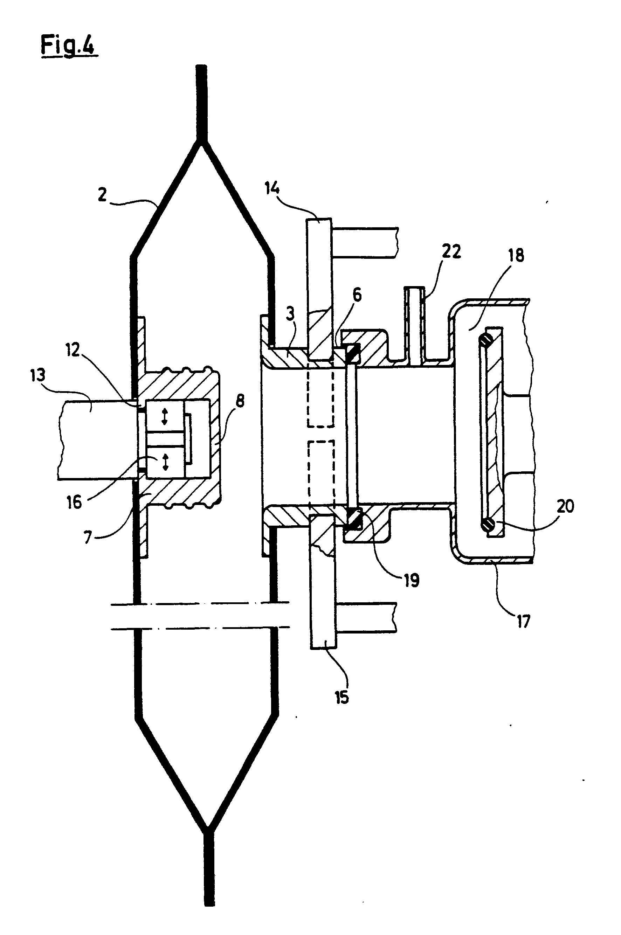

Figure 1 shows the bag of a thin flexible material with two opposed walls 1 and 2, which have two aligned holes. An inlet member in the bag comprises a sleeve 3, which by means of a radially outwards directed flange 4 at one of the sleeve is connected with the surrounding edge of the hole in one of the walls. The flange 4 is fastened to the inside of the bag wall 1, and the sleeve 3 extends through the hole and is situated mainly outside the bag. An annular recess 5 is formed in the outer surface of the sleeve 3 near its free end, whereby a radially outwardly directed flange 6 is formed at said end for engagement with equipment such as a filling apparatus external to the bag (Figures 3 and 4).

A closing member in the bag comprises a sleeve 7, which at one of its ends has an end wall 8 and at its other end has a radially outwardly directed flange 9. The flange 9 is connected with the surrounding edge of the hole in the other wall of the bag, the flange being fastened to the inside of the bag wall 2. The sleeve 7 extends inwardly from the bag wall with its axis aligned with the axis of the sleeve 3 of the inlet member. Annular protuberances 10 are formed around the outside of the sleeve 7 to seal between the sleeve 7 and the inside 11 of the sleeve 3 of the inlet member (Figure 2). A flange 12 extends radially inwards at the outer end of the sleeve 7 for engagement with said external equipment. Alternatively the closing member could be shaped similarly to the sleeve 3 of the inlet member for engagement with the external equipment, the sleeve 7 then having a portion projecting outwardly from the bag and including the radially outwardly directed flange.

It is also possible to adapt the external equipment for engagement with the closing member through the filling opening of the inlet member. In that case the end wall 8 of the sleeve 7 may be provided with a hole so that a radially inwardly directed flange is formed for engagement with the equipment. Of course the sleeve 7 has to be formed with a sealing end wall, which is conveniently located at the other end of the sleeve 7 and replaces the internal radial flange 12.

The sleeves 3 and 7 of the inlet member and the closing member, respectively, are preferably fastened to the bag by heat sealing. Of course, in that case the insides of the bag and the sleeves 3 and 7 will consist of a suitable material, such as plastics, for instance polyethylene.

With reference to Figures 3 and 4 aseptic filling of the bag will now be described.

Before filling, the bag — internally sterilized and in a closed condition — is placed on to the filling apparatus which comprises holding means in the form of a rod member 13 for engagement with the closing member, and two bifurcated forks 14, 15 for engagement with the inlet member. At one of its ends the rod member 13 is provided with a radially expandable device 16, which is introduced into the sleeve 7 of the closing member and expanded to engage behind the radial flange 12. The bag is moved by the rod member 13 such that the inlet member abuts against the filling member 17 having a supply channel 18 for filling material. The forks 14, 15 are moved radially into the recess 5 for engagement with the sleeve 3, whereafter the forks 14, 15 urge the sleeve firmly against the filling member 17 via an annular gasket 19 arranged around the opening of the filling member. The filling member 17 is provided with a valve 20, which is initially kept closed to seal the supply channel 18. The space 21 formed between the sleeve 7 of the closing member and the valve 20 of the filling member is sterilized by means of steam supplied through an inlet 22 in the filling member 17.

After sterilization of the space 21 the sleeves 3 and 7 are separated by moving the rod member 13 in the direction away from the forks 14, 15 (Figure 4). The valve 20 is then opened and the bag is filled with material by means of the filling member 17. During the filling of the bag the sleeve 7 is held at a distance from the sleeve 3 such that material entering the bag will impinge against the end wall 8 and be distributed within the bag.

When the bag is filled the supply channel 18 is closed by means of the valve 20, and the sleeves 3 and 7 are brought together by moving the rod member 13 in the direction towards the forks 14, 15 to close the filling opening. Before complete closure, material residues can be removed from the sleeves 3 and 7 and the filling member 17 by a further supply of steam. When the filling opening is completely closed, the forks 14, 15 are separated from the sleeve 3; the rod member 13 is moved in a direction away from the filling member 17 and disengaged from the bag, and the filled bag is removed from the filling apparatus.

In order to prevent unintentional emptying of the bag contents the inlet and closing members may be sealed to each other in a way such that the flanges 4 and 9, which are fastened to the respective bag walls 1 and 2, are secured to each other, for instance by heat sealing. In such a case the bag cannot be emptied without the formation of a separate discharge opening. However, if emptying of the bag is to be performed through the opening in the inlet member, the described arrangement is also well adapted for a sterile discharge operation. The discharge may be total or partial.

The inlet member will then be connected to a discharge member similar to the filling member 17. After supply of steam for the sterilization of the sleeve 3 of the inlet member and the end wall 8 of the closing member, the filling opening may be uncovered, and any desired quantity of material may be discharged from the bag. Possibly, the discharge member may be identical with the filling member if the latter is supplied with means for emptying of material from the bag.

## Claims

1. A closable bag including a main part (1, 2) of flexible material, and inlet and closing members (3, 7) made separately from the main part, the inlet member (3) being secured to the main part (1, 2) and having an opening for filling the bag and the closing member being arranged to co-operate with the inlet member (3) to close the filling opening from inside the bag, characterised in that the inlet and closing members (3, 7) are of a material stiffer than the flexible material of the main part (1, 2) and substantially resistant to deformation, the closing member (7) is provided with sealing means (10) engageable with the inlet member (3) to close the filling opening and releasable therefrom to open the filling opening, and the inlet and closing members (3, 7) have respective engagement means (6, 12) for cooperation with holding means (13, 16; 14, 15) of an apparatus for effecting relative movement of the inlet and closing members toward and away from each other to close and open respectively the filling opening by engaging the sealing means with and releasing the sealing means from the inlet member.

2. A closable bag according to claim 1, wherein the main part (1, 2) of the bag has a hole surrounded by an edge, and the inlet member comprises a sleeve (3) fastened to said edge by means of a flange (4).

3. A closable bag according to claim 1 or 2, wherein the closing member comprises a sleeve (7) having an end wall (8).

4. A closable bag according to any of claims 1-3, wherein said engagement means (5, 6) of the inlet member (3) comprises a radially outwardly extending flange (6) spaced from said main part of the bag.

5. A closable bag according to claim 3, wherein said engagement means of the closing member comprises a radially inwardly extending flange (12) on the sleeve (7).

6. A closable bag according to any of the preceding claims, wherein the closing member is fastened to said main part (1, 2) independently of the inlet member.

7. A closable bag according to claim 6, wherein said main part includes two opposed walls (1, 2), the inlet member is fastened to one (1) of said walls, and the closing member is fastened to the other wall (2) and located opposite the inlet member.

8. A method of aseptic filling of a closable bag as defined in any one of the preceding claims, characterized by the successive steps of:

placing a sterilized and closed bag in a filling apparatus;

engaging holding means (13, 16; 14, 15) of the apparatus with the engagement means (6, 12) of the inlet and closing members;

connecting the inlet member (3) to a filling member (17) of the apparatus and thereby forming a space (21) between the filling member and the closing member (7);

sterilizing said space (21) with a fluid, while maintaining the filling opening of the inlet member (3) closed;

operating the holding means of the apparatus to separate the inlet member (3) from the closing member (7) and thereby open the filling opening of the inlet member;

filling the bag with material supplied from said filling member (17);

operating the holding means of the apparatus to bring the inlet member and closing member together and thereby close the filling opening of the inlet member; and

removing the filled bag from the filling apparatus.

9. A method according to claim 8, wherein during said filling step, the closing member (7) is held spaced from the inlet member (3) and in a position where material entering the bag will impinge upon the closing member and thereby be distributed within the bag.

10. A method according to claim 8 or 9, wherein after said filling step and before complete closure of the filling opening, residues of material are removed from the filling member (17), the inlet member and the closing member by a fluid.

11. An apparatus for aseptically filling a closable bag as defined in any of claims 1-7, comprising:

holding means (13, 16; 14, 15) releasably engageable with the engagement means (6, 12) of the inlet and closing members and operable for moving said members relative to one another to open and close the filling opening of the inlet member;

a filling member (17) connectable to the inlet member for supply of filling material to the bag, the filling member being arranged for a space (21) to be formed between the closing member and the filling member before and after filling of the bag; and

means (22) for sterilizing said space while the filling member is connected to the inlet member.

**Patentansprüche**

1. Verschließbarer Beutel, mit einem Hauptteil (1, 2) aus flexiblem Material und Einlaß- und Verschlußteilen (3, 7), die separat vom Hauptteil hergestellt sind, wobei das Einlaßteil (3) an dem Hauptteil (1, 2) befestigt ist und eine Öffnung besitzt zum Füllen des Beutels, und wobei das Verschlußteil zur Zusammenarbeit mit dem Einlaßteil (3) angeordnet ist, um die Füllöffnung vom Inneren des Beutels aus zu verschließen, dadurch gekennzeichnet, daß die Einlaß- und Verschlußteile, (3, 7) aus einem Material bestehen, das steifer als das flexible Material des Hauptteiles (1, 2) ist und im wesentlichen einer Deformation widersteht, wobei das Verschlußteil (7) mit einer Dichteinrichtung (10) versehen ist, die mit dem Einlaßteil (3) in Eingriff bringbar ist, um die Füllöffnung zu verschließen, und die davon lösbar ist, um die Füllöffnung zu öffnen, und daß die Einlaß- und Verschlußteile (3, 7) jeweils Eingriffsmittel (6, 12) zum Zusammenwirken mit Haltemitteln (13, 16; 14, 15) eines Apparates haben, um eine relative Verschiebung der Einlaß- und Verschlußteile in Richtung auf einander zu bzw. voneinander weg zu bewirken, um die Füllöffnung durch den Eingriff der Dichteinrichtung mit dem Einlaßteil und durch Lösen der Dichteinrichtung von demselben zu verschließen bzw. zu öffnen.

2. Verschließbarer Beutel nach Anspruch 1, bei dem der Hauptteil (1, 2) des Beutels ein Loch hat, welches von einem Rand umgeben ist, und bei dem das Einlaßteil eine Hülse (3) aufweist, die an dem Rand vermittels eines Flansches (4) befestigt ist.

3. Verschließbarer Beutel nach Anspruch 1 oder 2, bei dem das Verschlußteil eine Hülse (7) aufweist, die eine Endwandung (8) besitzt.

4. Verschließbarer Beutel nach einem der Ansprüche 1 bis 3, bei dem das Eingriffsmittel (5, 6) des Einlaßteils (3) einen radial nach außen sich erstreckenen Flansch (6) umfaßt, der von dem Hauptteil des Beutels beabstandet ist.

5. Verschließbarer Beutel nach Anspruch 3, bei dem das Eingriffsmittel des Verschlußteiles einen radial einwärts sich erstreckenden Flansch (12) an der Hülse (7) aufweist.

6. Verschließbarer Beutel nach einem der voranstehenden Ansprüche, bei dem das Verschlußteil an dem Hauptteil (1, 2) unabhängig von dem Einlaßteil befestigt ist.

7. Verschließbarer Beutel nach Anspruch 6, bei dem der Hauptteil zwei einander gegenüberstehende Wandungen (1, 2) einschließt, wobei das Einlaßteil an einer (1) der Wandungen befestigt und das Verschlußteil an der anderen Wandung (2) und gegenüber von dem Einlaßteil angeordnet ist.

8. Verfahren zum aseptischen Füllen eines verschließbaren Beutels nach einem der vorstehenden Ansprüche, gekennzeichnet durch die folgenden sukzessiven Schritte:

Einbringen eines sterilisierten und verschlossenen Beutels in einen Füllapparat;

Anschließen der Haltemittel (13, 16; 14, 15) des Apparates an die Eingriffsmittel (6, 12) der Einlaß- und Verschlußteile;

Verbinden (1) des Einlaßteiles (3) mit einem Füllteil (17) des Apparates und dadurch Ausbilden eines Raumes (21) zwischen dem Füllteil und dem Verschlußteil (7);

Sterilisieren des Raumes (21) mittels eines Fluids während die Füllöffnung des Einlaßteiles (3) geschlossen gehalten wird;

Betätigen der Haltemittel des Apparates, um das Einlaßteil (3) von dem Verschlußteil (7) zu trennen und dadurch die Füllöffnung des Einlaßteiles zu öffnen;

Füllen des Beutels mit einem Material, welches von dem Füllteil (17) geliefert wird;

Betätigen der Haltemittel des Apparates, um das Einlaßteil und das Verschlußteil zusammenzubringen und dadurch die Füllöffnung des Einlaßteiles zu verschließen, und

Entfernen des gefüllten Beutels aus dem Füllapparat.

9. Verfahren nach Anspruch 8, bei dem während des Füllschrittes das Verschlußteil (7) von dem Einlaßteil beabstandet und in einer position gehalten wird, in der das in den Beutel eintretende Material auf das Verschlußteil aufschlägt und dadurch innerhalb des Beutels verteilt wird.

10. Verfahren nach Anspruch 8 oder 9, bei dem nach dem Füllschritt und vor dem vollständigen Verschließen der Füllöffnung Reste des Materials von dem Füllteil (17), dem Einlaßteil und dem Verschlußteil durch ein Fluid entfernt werden.

11. Apparat zum aseptischen Füllen eines verschließbaren Beutels gemäß einem der Ansprüche 1 bis 7, mit

Haltemitteln (13, 16; 14, 15), die mit den Eingriffmitteln (6, 12) der Einlaß- und Verschlußteile lösbar in Eingriff bringbar und zum Verschieben der Teile relativ zueinander betätigbar sind, um die Füllöffnung des Einlaßteiles zu öffnen und zu schließen;

einem Füllteil (17), der mit dem Einlaßteil zum Zuführen des Füllmaterials zu dem Beutel verbindbar ist, wobei der Füllteil so angeordnet ist, daß ein Raum (21) zwischen dem Verschlußteil und dem Füllteil vor und nach dem Füllen des Beutels ausgebildet wird; und mit

Mitteln (22) zum Sterilisieren des Raumes während der Füllteil mit dem Einlaßteil verbunden ist.

## Revendications

1. Sac fermable comprenant une partie principale (1, 2) en un matériau flexible, et des organes d'entrée et de fermeture (3, 7) constitués séparément de la partie principale, l'organe d'entrée (3) étant fixé à la partie principale (1, 2) et présentant une ouverture de remplissage du sac et l'organe de fermeture étant agencé pour coopérer avec l'organe d'entrée (3) et fermer l'ouverture de remplissage depuis l'intérieur du sac, caractérisé en ce que les organes d'entrée et de fermeture (3, 7) sont en un matériau plus rigide que le matériau flexible de la partie principale (1, 2) et sensiblement résistant à la déformation, l'organe de fermeture (7) est muni de moyens de fermeture étanche (10) pouvant coopérer avec l'organe d'entrée (3) pour fermer l'ouverture de remplissage, et en être dégagés pour ouvrir l'ouverture de remplissage, et les organes d'entrée et de fermeture (3, 7) comportent des moyens d'engagement (6, 12) respectifs pour coopérer avec des moyens de retenue (13, 16; 14, 15) d'un dispositif permettant d'obtenir un mouvement relatif des organes d'entrée et de fermeture qui les rapproche et les éloigne l'un de l'autre pour fermer et ouvrir respectivement l'ouverture de remplissage en amenant les moyens de fermeture étanche en engagement avec l'organe d'entrée et en dégageant les moyens de fermeture étanche de l'organe d'entrée.

2. Sac fermable selon la revendication 1, dans lequel la partie principale (1, 2) du sac comprend un trou entouré par un bord, et l'organe d'entrée comprend un manchon (3) fixé audit bord par une bride (4).

3. Sac fermable selon la revendication 1 ou 2, dans lequel l'organe de fermeture comprend un manchon (7) comportant une paroi d'extrémité (8).

4. Sac fermable selon l'une quelconque des revendications 1 à 3, dans lequel lesdits moyens d'engagement (5, 6) de l'organe d'entrée (3) comprennent une bride (6) s'étendant radialement vers l'extérieur et espacée de ladite partie principale du sac.

5. Sac fermable selon la revendication 3, dans lequel lesdits moyens d'engagement de l'organe de fermeture comprennent une bride (12) s'étendant radialement vers l'intérieur sur le manchon (7).

6. Sac fermable selon l'une quelconque des revendications précédentes, dans lequel l'organe de fermeture est fixé à ladite partie principale (1, 2) indépendamment de l'organe d'entrée.

7. Sac fermable selon la revendication 6, dans lequel ladite partie principale comprend deux parois opposées (1, 2), l'organe d'entrée est fixé à l'une (1) desdites parois, et l'organe de fermeture est fixé à l'autre paroi (2) et est situé à l'opposé de l'organe d'entrée.

8. Procédé de remplissage aseptique d'un sac fermable tel que défini dans l'une quelconque des revendications précédentes, caractérisé par les étapes consistant à:

placer un sac fermé et stérilisé dans un dispositif de remplissage;

amener en engagement des moyens de retenue (13, 16; 14, 15) du dispositif avec les moyens d'engagement (6, 12) des organes d'entrée et de fermeture;

relier l'organe d'entrée (3) à un organe de remplissage (17) du dispositif et former ainsi un espace (21) entre l'organe de remplissage et l'organe de fermeture (7);

stériliser ledit espace (21) au moyen d'un fluide, tout en maintenant l'ouverture de remplissage de l'organe d'entrée (3) fermée;

actionner les moyens de retenue du dispositif pour séparer l'organe d'entrée (3) de l'organe de fermeture (7) et ouvrir ainsi l'ouverture de remplissage de l'organe d'entrée;

remplir le sac avec un produit fourni par ledit organe de remplissage (17);

actionner les moyens de retenue du dispositif pour rassembler l'organe d'entrée et l'organe de fermeture et fermer ainsi l'ouverture de remplissage de l'organe d'entrée; et

retirer le sac rempli du dispositif de remplissage.

9. Procédé selon la revendication 8, dans lequel, pendant ladite étape de remplissage, l'organe de fermeture (7) est maintenu écarté de l'organe d'entrée (3) et dans une position dans laquelle le produit pénétrant dans le sac vient heurter l'organe de fermeture et est ainsi réparti dans le sac.

10. Procédé selon la revendication 8 ou 9, dans lequel, après ladite étape de remplissage et avant fermeture complète de l'ouverture de remplissage, des résidus de produit sont éliminés de l'organe de remplissage (17), de l'organe d'entrée et de l'organe de fermeture par un fluide.

11. Dispositif pour le remplissage aseptique d'un sac fermable tel que défini dans l'une quelconque des revendications 1 à 7, comprenant:

des moyens de retenue (13, 16; 14, 15) pouvant être amenés en engagement amovible avec les moyens d'engagement (6, 12) des organes d'entrée et de fermeture et pouvant être actionnés pour déplacer lesdits organes l'un par rapport à l'autre pour ouvrir et fermer l'ouverture de remplissage de l'organe d'entrée;

un organe de remplissage (17) pouvant être relié à l'organe d'entrée pour envoyer le produit de remplissage dans le sac, l'organe de remplissage étant agencé pour qu'un espace (21) soit formé entre l'organe de fermeture et l'organe de remplissage avant et après le remplissage du sac; et

des moyens (22) pour stériliser ledit espace quand l'organe de remplissage est relié à l'organe d'entrée.

Fig.1

Fig.2

## Fig.3

## Fig.4